# EUROPEAN PATENT SPECIFICATION

(11) **EP 1 229 685 B1**
(45) Date of publication and mention of the grant of the patent: **05.04.2006**
(21) Application number: 02394018.2
(22) Date of filing: 05.02.2002
(51) Int. Cl.: H04L 12/24

(54) **Service level agreement manager for a data network**
Verwalter von Dienststufenübereinkommen in einem Datennetz
Gestionnaire d'agrément de niveau de service dans un réseau de données

(30) Priority: 06.02.2001 US 776852
(43) Date of publication of application: 07.08.2002
(73) Proprietor: Nortel Networks Limited, St.Laurent, Quebec H4S 2A9 (CA)
(72) Inventor: Lam, Trinh T., Santa Clara, CA 95050 (US); Turner, Doug G., Gloucester, Ontario K1B 4A9 (CA)
(74) Representative: Boyce, Conor

(56) References cited:
- LEWIS L: "Spectrum Service Level Management Definition, Offerings, and Strategy" TECHNICAL NOTE LML-CTRON-98-02, 30 March 1998 (1998-03-30), XP002150696 Retrieved from the Internet: <URL:www.aprisma.com/white-papers/spectrum /slm.pdf> [retrieved on 2000-10-20]
- LARSEN A K: "ALL EYES ON IP TRAFFIC. NEW APPS CAN MONITOR INTERNET AND INTRANET TRADDIC, BUT DO THEY DELIVER ENOUGH DATA TO HOLD ISPS TO THEIR PROMISES?" DATA COMMUNICATIONS, MCGRAW HILL. NEW YORK, US, vol. 26, no. 4, 21 March 1997 (1997-03-21), pages 54,56-60,62, XP000659549 ISSN: 0363-6399
- QINZHENG KONG ET AL: "A management framework for Internet services" NETWORK OPERATIONS AND MANAGEMENT SYMPOSIUM, 1998. NOMS 98., IEEE NEW ORLEANS, LA, USA 15-20 FEB. 1998, NEW YORK, NY, USA,IEEE, US, 15 February 1998 (1998-02-15), pages 21-30, XP010267353 ISBN: 0-7803-4351-4

## Description

The invention relates to devices and methods useful in the assessment of the level of service delivered to a customer against performance objectives relating to the operation of a data network.

Communications networks, especially packetised data networks, are currently utilised in various applications for transmission and reception of data between parties at different locations. A typical data transmission system includes a plurality of end-user sites and a data network, which resides between the sites to facilitate communications.

Typically, when a party needs to send and receive data over distances, the party (end-user) enters into a service contract with a service provider to provide access to a data network. Depending on an individual end-user's needs, the service contract may include provisions that guarantee a certain minimum performance requirements that the service provider must meet. For example, if the end-user expects to send and receive a certain amount of data on a regular basis, the end-user may want the service provider to guarantee that a certain minimum bandwidth will be available to the end-user at all times. Certain end-user applications are sensitive to transmission delays and/or the loss of data within the network. Specifically, while loss of data packets can generally be detected by end-users, and lost packets can be retransmitted, certain applications cannot function when the percentage of lost data exceeds a given level. Thus, the end-user may want the service provider to guarantee that the average or minimum ratio of data units delivered by the network to data units offered to the network at the far-end is above a certain percentage and/or that the average or maximum transmission delays will not exceed a certain duration.

From a service provider's perspective, it would be competitively advantageous to be able to demonstrate to potential and existing end-users that the service provider is capable of meeting and does meet such performance objectives. Thus, the capability to provide analysis of the level of service delivered by the end-user would be advantageous from both an end-user and service provider's standpoint.
Technical document XP-002150696, titled "Spectrum Service Level Management Definition, Offerings, and Strategy" (Dr. Lundy Lewis, Cabletron systems, New Hampshire, Technical Note [m]-ctron-98-02, March 30, 1998) discloses a computer readable storage medium containing a program element for execution by a computing entity for implementing a SLA system for assessing a performance of a data network, the data network having a transport layer, a services layer; an applications layer, a plurality of probes associated with the transport services and applications layers of the data network and generating performance metrics data, said SLA system comprising: a SLA manager including: i. an input to receive the performance metrics data and the SLA profile associated to the user of the data network; and ii. a processing unit for measuring a certain performance objective defined by the SLA profile at least in part on the basis of performance metrics data from a first selected one of the plurality of probes associated with one layer of the data network in conjunction with performance metrics data from a second selected one of the plurality of probes associated with another layer of the data network; said processing unit being operative to generate at least one SLA action in response to the measuring.

Various devices have been proposed in the past to provide some measure of the performance of a data network. The existing devices only track the performance of some limited aspects of the data network, which may not be sufficient to assess the overall network performance. Accordingly, there is a need in the industry to develop a system and components of a system that can assess the performance of a data network on a broader basis such as to provide a more comprehensive image of the data network performance.

The present invention provides a computer readable storage medium containing a program element for execution by a computing entity for implementing a SLA system for assessing a performance of a data network characterised in that said SLA system further comprises a SLA profile generator including: a user interface enabling a user of the data network to provide data elements conveying at least one performance objective related to a performance of the data network, and a processor adapted for processing said data elements to generate a SLA profile associated to the user of the data network, the SLA profile defining one or more performance objectives related to the performance of the data network.

The advantage of the SLA manager resides in its ability to track complex performance objectives that can be assessed on the basis of performance metrics issued by probes associated with different network layers. The resulting view of the data network performance is more complete than the results obtained from a device designed to track performance objectives on the basis of performance metrics issued by a probe(s) associated to the same network layer.

The transport, services and applications layers reflect a hierarchical organization of the data network. The transport layer is the lowest layer in the hierarchy, the applications layer the highest layer in the hierarchy and the services layer is the intermediate layer in the hierarchy. Typically, the transport layer refers to the functional elements of the data network that are responsible for the transport of data from one point of the network to another point of the network. Optionally, the transport layer can be divided in two sub-layers, namely the transport core layer and the virtual transport layer. The transport core layer typically encompasses the hardware (physical level connections) and the protocols that govern the hardware connections between network nodes. Examples of such protocols include the Internet Protocol (IP), the Asynchronous Transfer Mode (ATM), the Multi-Protocol Label Switching (MPLS), the Frame Relay, and the Time Division Multiplexing (TDM), and emerging native optical services such as managed Lambda services. The virtual transport layer is a one-step abstraction toward the services layer. The virtual transport layer encompasses software entities that act as interfaces between the core transport layer and the services layer and the applications layer. A virtual transport layer employs the underlying services of the transport core in delivery of service. For example, a virtual transport layer can be an enterprise IP VPN comprised of virtual IP routers running over an ATM infrastructure. Alternatively, a virtual transport layer can provide a dial access service with user authentication, address assignment, and secure tunneling to an enterprise site.

The services layer encompasses facilities that form a basis upon which specific user oriented applications can run. Typically, the services layer includes facilities that are most of the time transparent to the user but focused on delivery of services for the user. Examples include security services such as user authentication and public-key based encryption, subscriber-based firewalls, policy services (controlling aspects of the network operation based on a certain policy again oriented to the user/subscriber), billing services, IP-customized services based upon aspects such as time of day, service activation based upon subscriber profiles and class of service, customer self-service functions such as dynamic bandwidth request services, etc.

Finally, the applications layer encompasses the functions of the network with which the user interacts directly. Examples include software entities that the user will specifically invoke to perform a certain task, such as spreadsheet applications, voice mail applications, multimedia applications, wireless telephony applications; a range of collaborative applications including gaming, remote learning, tele-medicine, enterprise video meet services, remote security and monitoring services, etc.

Other broad aspects of the invention include a method to assess the performance of a data network and a tool to generate an SLA profile.

A detailed description of examples of implementation of the present invention is provided hereinbelow with reference to the annexed drawings, in which:
Fig. 1 is a functional block diagram of a tool for creating an SLA profile, in accordance with a specific example of implementation of the present invention;
Fig. 2 is a more detailed block diagram of an SLA performance metrics selector unit and an SLA function selector unit of the tool shown in Fig. 1;
Fig. 3a is a more detailed block diagram of an SLA rule selector of the tool shown in Fig. 1;
Figure 3b is a flowchart that illustrates the process of the tool shown in Fig. 1;
Fig. 4 is a functional block diagram of an SLA manager in accordance with an example of implementation of the present invention;
Fig. 5 is a high-level functional block diagram of an action thread of the SLA manager shown in Fig. 4;
Fig. 6 is a variant of the action thread shown in Fig. 5;
Fig. 7 is a block diagram of another variant of the action thread shown in Fig. 5;
Fig. 8 is a block diagram of two action threads linked together;
Fig. 9A is a further variant of the action thread shown in Fig. 5;
Fig. 9B is a further variant of the action thread shown in Figure 5;
Fig. 10 is a block diagram of a complete system using the SLA manager to measure the performance of a data network;
Fig. 11 is a block diagram of a data network having a transport functional layer, a services functional layer and an applications functional layer;
Fig. 12 is a flowchart illustrating the operation of the SLA manager; and
Fig. 13 is a structural block diagram of a computing device for executing the software that implements the tool for creating an SLA profile or the SLA manager.

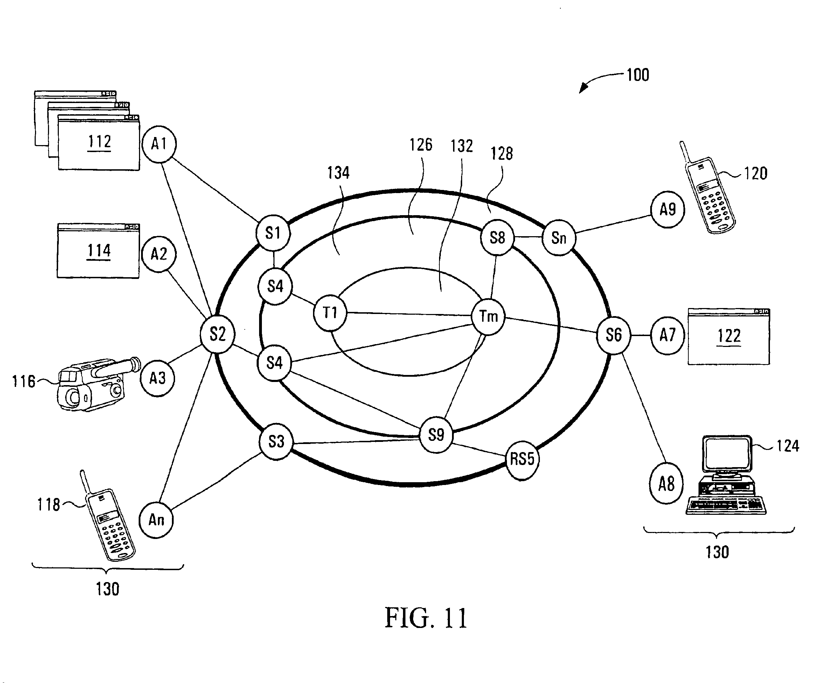

Figure 11 provides an illustration of a typical data network. The data network 100 provides various services to seven users (arbitrary number) namely user 112, 114, 116, 118, 120, 122 and 124. The users run different applications. User 112 runs a web browsing software. User 114 runs a graphics software. User 116 runs a video capture software. User 118 is recording a voice mail message at a wireless telephone. User 120 is engaged in a conversation with a remote party at a wireless telephone. User 122 uses a word processing application. User 124 runs a game application.

The data network 100 defines three functional layers namely a transport layer 126, a services layer 128 and an applications layer 130. The transport layer 126 is divided in two parts, namely a core transport layer 132 and a virtual transport layer 134. Further layering of the network into multiple hierarchical transport domains is possible: this representation is not intended to be limiting.

The data network 100 uses an SLA manager (not shown in Figure 11) to track the performance of the data network 100 based on performance objectives specified in an SLA profile. The operation of the SLA manager will be described in greater detail later.

The SLA profile directs the operation of the SLA manager by defining the performance objectives to be tracked. Different users 112-124 are likely to require different SLA profiles to meet individual needs.

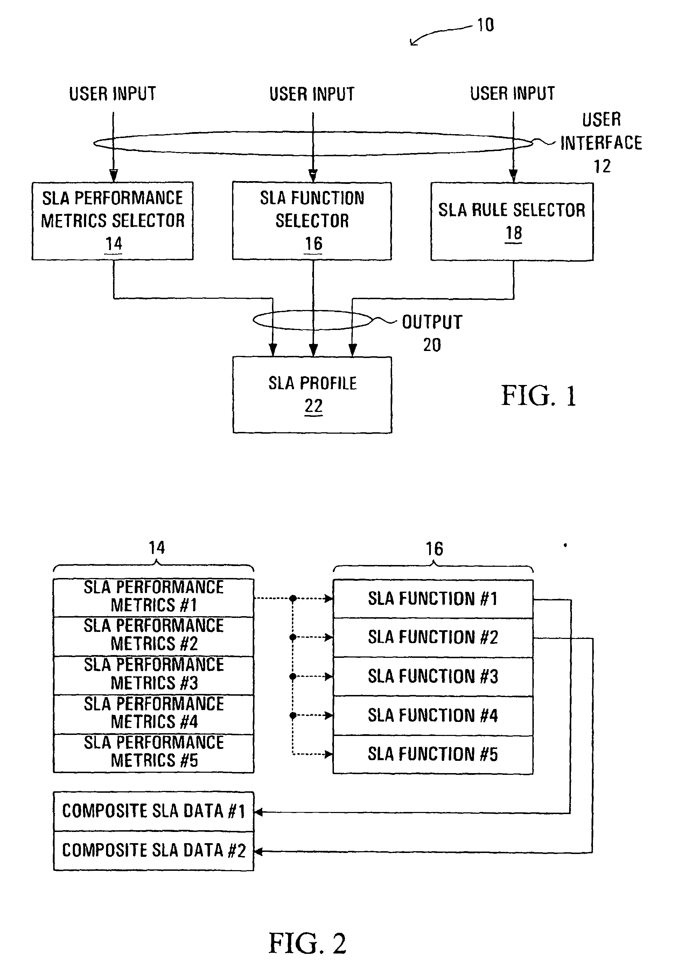

Fig. 1 is a high-level functional block diagram of a tool 10 for creating an SLA profile. The tool 10 is implemented in software on a suitable computing platform that will be described later. The tool 10 receives user commands and displays information to the user through a user interface 12. A plurality of functional units are provided allowing the user to specify through the user interface 12 the desired characteristics or features of the SLA profile that is to be created. In the example of implementation shown in Fig. 1, the tool 10 has three such functional units. This is not an essential requirement of the invention as some of these units can be omitted, or additional units can be added.

The three functional units of the tool 10 are the SLA performance metrics selector 14, the SLA function selector 16 and the SLA rule selector 18. The SLA performance metrics selector 14 allows a user to specify through the user interface 12 SLA performance metrics. A performance metrics is a measurable factor that defines one or more aspects of the data network operation. Such factor will normally have a range of variations.

Fig. 2 illustrates in greater detail the SLA performance metrics selector 14. Under one possibility, the user is presented with a menu listing a plurality of predetermined SLA performance metrics and the user can select in the list a particular performance metrics of interest. Alternatively, the user can enter in a field the name of a certain performance metrics of interest instead of selecting it through a menu system.

Probes in the data network 100 generate performance metrics data. The performance metrics data is the measurement of a performance metrics. For example, the performance metrics data represents the value of a performance metrics (the measurable parameter) at a given time. Consider the more specific example of the bandwidth over a certain network segment. Here the performance metric is the bandwidth and the performance metrics data is the value of the bandwidth at a certain time, location, etc.

A probe for generating performance metrics data may use a combination of technologies. For example, a probe may use FTP to retrieve a remote file stored as ASCII text using XML for structuring the contents. Alternatively, a similar ASCII file could be transferred via FTP but be formatted using a CSV (Comma Separated Value) format. Some common probes can be created to manage standard protocols, such as SNMP, and others need to be created for proprietary data schemes. Note also that more than one type of probe may be used for collecting data for a given service. The data required may be distributed across many sources within a network (or other system), and require different probes for extracting the data.

Referring back to Figure 11, the data network 100 has a plurality of probes that deliver performance metrics data that are associated with the various functional layers of the data network 100. More specifically, the data network 100 includes a set of probes associated with the transport layer 126, a set of probes associated with the services layer 128 and a set of probes associated with the applications layer 130. In general, a probe associated with a certain functional layer of the data network 100 will deliver performance metrics data relating to the operation of the that functional layer.

In Figure 11, the probes are shown as circles. A circle with the letter "T" identifies a transport layer probe, the number that follows the letter "T" represents the probe number. Similar representations are used for the services layer and the applications layer probes with the exception that the probes are identified by the letters "S" and "A", respectively.

The SLA performance metrics selector 14 can accept as input from the user the identification of the SLA performance metrics of interest for the purpose of a particular SLA profile. This approach requires a mapping between the SLA parameters and the corresponding probes, such that in use data only from the probes producing the performance metrics data of interest will be considered. The mapping can be accomplished through a data structure that associates the SLA performance metrics to the respective probes in the data network 100.

Alternatively, the SLA performance metrics selector 14 can accept as input the identification of the probes in the network that generate the SLA performance metrics data of interest. This method indirectly specifies the SLA performance metrics required for a given profile.

The SLA function selector 16 allows the user to define a function to be applied on performance metrics data. The SLA function can be any suitable function applied on performance metrics data. Examples include:
a) minimum function - this represents a function, which determines the smallest value in a set of performance metrics data;
b) maximum function - this represents a function, which determines the largest value in a set of performance metrics data;
c) average (mean) - this represents a function that adds all the values in a set of performance metrics data and then divides it by the number of values in the performance metrics data;
d) summation - this represents a function that adds all the values in a set of performance metrics data;
e) maximum consecutive - this represents the highest number of consecutive samples in a set of performance metrics data with a value of "True". This function can be used to evaluate clauses such as "more than two days in a row";
f) other Boolean functions; and
g) heuristics functions.

The heuristics functions are useful in refining the data stream that is generated by the probes such as to limit the amount of data to be analysed and retain only the information that is the most useful in the context of a given SLA profile. As discussed earlier, the SLA performance metrics selector 14 determines or defines a set of probes in the data network 100 applicable to a given SLA profile. These probes define a set of paths through the data network 100 over which measurements are to be taken during the execution of the SLA profile. Conceptually, if a tree is drawn to identify all the paths possibilities, a very large set of probe paths will be produced, particularly in the case where the number of probes selected is large. The heuristics functions allow the user to specify criteria to be applied during the processing of the performance metrics data generated by the probes when the SLA profile is run. Such criteria would normally have the effect of reducing the amount of data to be processed, in effect "pruning" the full tree of probe paths. A simple example of a criterion is to use a measurement from one probe one day and use the measurement from another probe another day. The criteria may also involve fully blocking the information from one or more probes, if that information is of no interest to the particular SLA profile.

Consider now a more complex example. In Figure 11, it is possible to derive a tree denoting a set of probe paths. Based upon SLA requirements, only subset of paths and sub-paths through the tree are of interest for a specific SLA profile. For example, an SLA performance metrics based on path A1-S1-S4-T1-Tn-S6-A7 can be employed to measure the performance of the data network from the perspective of the user 112. Alternatively, a sub-path to abstract the details of the transport layer 126 can be employed. Such "reduced" SLA performance metrics could be based on path A1-S1-S4-S6-A7.

An SLA performance metrics data processed by an SLA function produces a composite SLA data. This is illustrated in Fig. 2. Note that an element of information processed by an SLA rule (the SLA rules will be described later) can also produce a composite SLA data. The SLA performance metrics selector 14 allows the user to select one or more SLA performance metrics data, as described above. The SLA function selector 16 allows the user to specify a function to be applied on the performance metrics data generated by one or more probes during the execution of the SLA profile by the SLA manager.

The choice of the SLA function can be made through a menu system, typing in a field the name of the SLA function, or by any other suitable selection mechanism. As shown by the dotted lines in Fig. 2, the SLA performance metrics #1 can be linked to any one of the SLA functions. The same functional linkage can also be established between any one of the remaining SLA performance metrics in the list. This has not been shown in the drawings for simplicity. It should be appreciated that it is not essential that every SLA function be applicable to every SLA performance metrics. Possibilities where an SLA function is applicable to only a subset of the entire set of SLA performance metrics are clearly within the scope of the present invention. In this case, the tool 10 includes a mechanism to verify the validity of the selection made by the user and avoid instances where the user selects an SLA function that cannot support a previously selected SLA performance metrics. It is within the reach of a person skilled in the art to create such validation mechanism and no further details are required here.

A composite SLA data is produced when an SLA function is applied on performance metrics data. In the example shown in Fig. 2, two such composite SLA data are produced and associated with SLA functions #1 and #2. It will be plain to a person skilled in the art that many other possibilities exist.

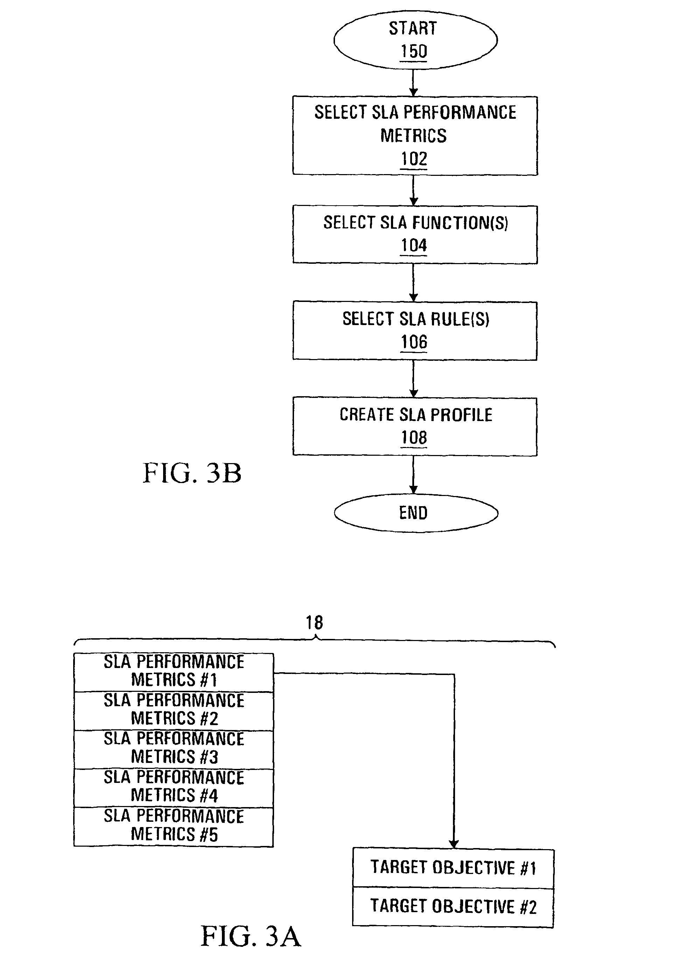

Fig. 3A provides a more detailed illustration of the SLA rule selector 18. The SLA rule selector 18 allows the user to specify one or more SLA rules to be applied on performance metrics data or to be applied on composite SLA data. An SLA rule when applied on data triggers at least one SLA action. An SLA action is either a positive action (some event takes place) or a null action (nothing happens). Note that the above does not imply that the application of an SLA rule produces an SLA positive action or a null SLA action every time. Possibilities where the application of an SLA rule produces every time an SLA positive action are within the scope of this invention. For example, when a condition specified by an SLA rule is met, SLA positive action #1 is triggered, otherwise SLA positive action #2 is triggered.

In one specific example, SLA rules can be Boolean functions. Those include:
a) less than - the result is "True" if the data on which the SLA rule is applied is determined to be less than a certain mark, "False" otherwise;
b) greater than - the result is "True" if the data on which the SLA rule is applied is determined to be greater than a certain mark, "False" otherwise;
c) less than or equal to - the result is "True" if the data on which the SLA rule is applied is determined to be less than or equivalent to a certain mark, "False" otherwise;
d) equal to - the result is "True" if the value on which the SLA rule is applied is determined to be equivalent to a certain mark, "False" otherwise; and
c) between upper and lower boundaries - this represents a function that determines if data is between an upper boundary and a lower boundary.

The above list is not exhaustive and many other possibilities exist.

The flowchart at Fig. 3B summarises the process for the creation of the SLA profile by using the tool 10. At step 150, the process starts. At step 102, the user selects through the user interface 12 one or more SLA performance metrics. At step 104, the user selects one or more SLA functions and at step 106, the user selects one or more SLA rules. At step 108, the tool 10 generates through an output 20 (shown in Fig. 1) the SLA profile 22. The SLA profile 22 is data recorded on a computer readable storage medium directing the operation of an SLA manager 24.

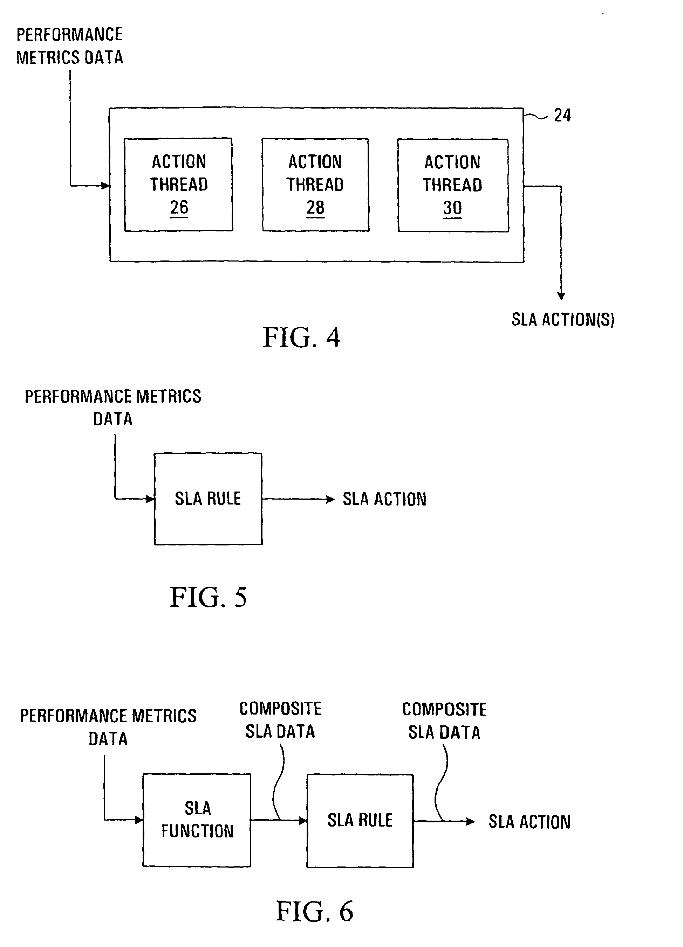

When the SLA manager 24 runs, it implements a process referred to as "action thread". An action thread includes the processing of performance metrics data according to the SLA function(s) aud/or SLA rule(s) defined by the SLA profile to produce SLA action(s). Note that an action thread may include additional steps. In the example shown in Fig. 4, the SLA manager 24 implements three action threads 26, 28, 30, it being understood that more or less action threads are permitted.

An advantageous feature is the ability to build with the tool 10 SLA profiles that define action threads measuring performance metrics based on information generated from probes associated to different functional layers of the data network 100. For instance, such an action thread can process performance metrics data from one or more probes associated with the transport layer 126 in conjunction with performance metrics data from one or more probes associated with the services layer 128. Evidently, other permutations are possible.

A detailed example of an action thread is shown in Fig. 5. The action thread includes an SLA rule that is applied to performance metrics data to generate an SLA action. There is no SLA function involved In this case, the SLA rule compares the performance metrics data to the performance objective and, if the result of the comparison indicates that the performance objective has not been met, then an SLA action is triggered. Under this example, the SLA action is the generation of a message to signal a rebate event. That message can be directed to the electronic account of the customer to make the rebate effective.

Fig. 6 is a more complex example of an action thread where the performance metrics data is first subjected to an SLA function that generates composite SLA data to which is then applied an SLA rule.

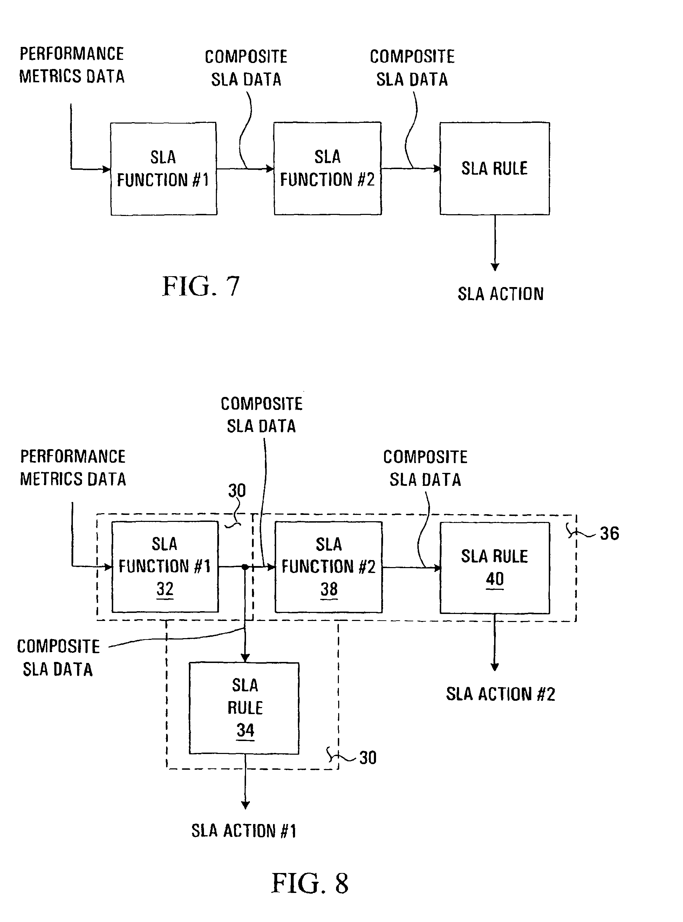

Fig. 7 illustrates yet another example of an action thread characterised by the consecutive application of two SLA functions to performance metrics data. The resulting composite SLA data is then processed by an SLA rule.

Fig. 8 shows an example where two action threads share a common SLA function. Here, the action thread 30 includes an SLA function 32 that generates composite SLA data supplied to an SLA rule 34. The SLA rule 34 then generates an SLA action #1. The action thread 36 also comprises the SLA function 32 and further includes the SLA function 38 and the SLA rule 40 that generates a SLA action #2.

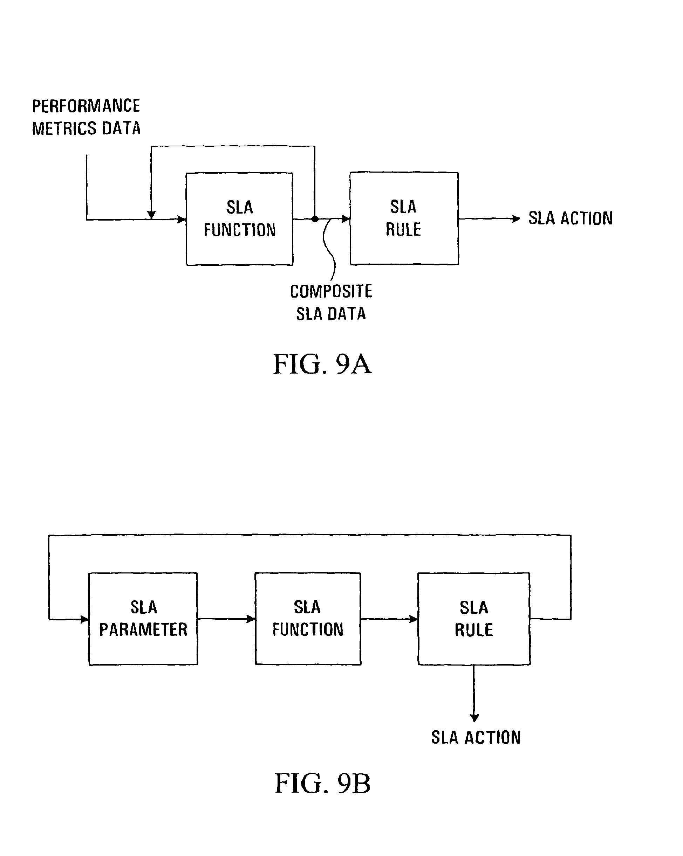

Fig. 9A is another example of an action thread where the SLA function includes a looping mechanism to return the result of the processing of the SLA function to its input so that it is processed again a number of times.

Fig. 9B is yet another example of an action thread. Here the application of an SLA rule produces an SLA action and also composite SLA data that could be used for further processing. In other words, the SLA rule acquires here the behaviour of an SLA function in addition to its basic functionality of SLA action generation. The composite SLA data generated by the SLA rule is suitable for processing by an SLA function or by the same or different SLA rule.

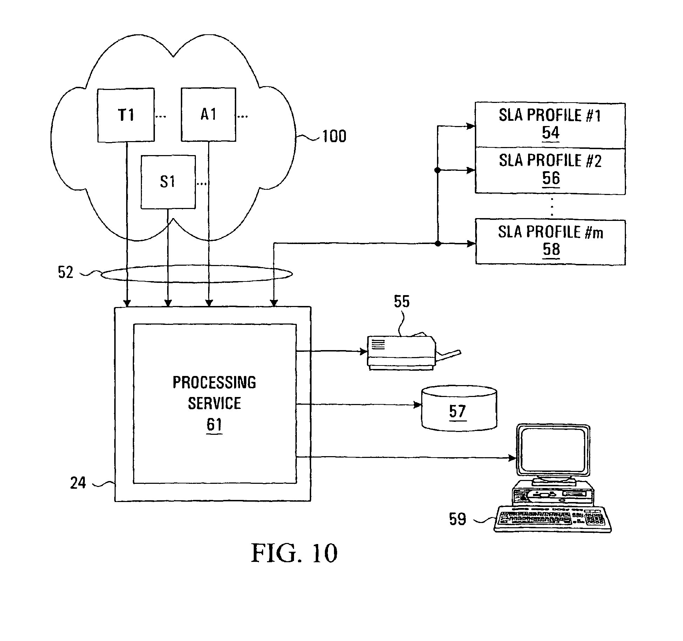

Fig. 10 is a block diagram of the SLA manager 24 that collects information from a data network. The SLA manager 24 connects to the probes T1-Tn, S1-Sn and A1-An that generate performance metrics data supplied to input 52 of the SLA manager 24.

The SLA manager 24 also receives through input 52 data representative of SLA profiles namely the SLA profiles 54, 56 and 58. Each profile may be associated to a different client or user of the data network 100. The SLA profiles 54, 56 and 58 may reside in a database that is remote or local to the SLA manager 24.

The SLA manager 24 includes a processing service 61 that processes the information received at the input 52. In order to determine if a certain performance objective is met, the SLA manager 24 will consider the performance metrics data generated by the probes T1-n, S1-n and A1-n. as described earlier, this determination is made by implementing one or more action threads. The action threads give rise to SLA actions. In the example illustrated in Fig. 10, one SLA action is a positive SLA action which is the printing of a report on a printer 55, another SLA action is a positive SLA action which is the creation, modification or deletion of a billing record in a database 57 and another SLA action is also a positive SLA action which is a command to an e-mail server 59 to send an e-mail message to a recipient. A positive SLA action can be such as to trigger pro-active behaviour designed to alter the service provided to the end-user to automatically adjust the service to meet SLA performance objectives.

While assessing if a certain performance objective is met, the SLA manager 24 may consider the performance metric data generated by a single probe, by a plurality of probes belonging or associated to the same functional layer of the data network 100, or by a plurality of probes belonging to different functional layers of the data network 100.

The following table provides detailed examples of performance metrics that can be tracked in a data network. This example should be treated as an aid to understanding the concept of the invention and not as limiting in any way to the inventive principle- The person skilled in the art will readily appreciate that additional performance objectives can be added to this table or performance objectives in the table can be removed.

In the table:
1. The "class" column identifies to which class the performance metrics belongs. This categorisation is done to facilitate the analysis of the information and it is not essential in any way to the invention. Other systematic grouping can be considered.
2. The "sub-class" column identifies a sub-class where the performance metrics belongs;
3. The "applicable probes" column identifies from which probes performance metrics data is obtained. Here, "T", "S" and "A" refer to transport layer probes, service layer probes and application layer probes, respectively;
4. When the column "service provider" is checked, the information related to the performance objective is useful primarily to the service provider; and
5. When the column "user" is checked, the information related to the performance objective is useful primarily to the user.

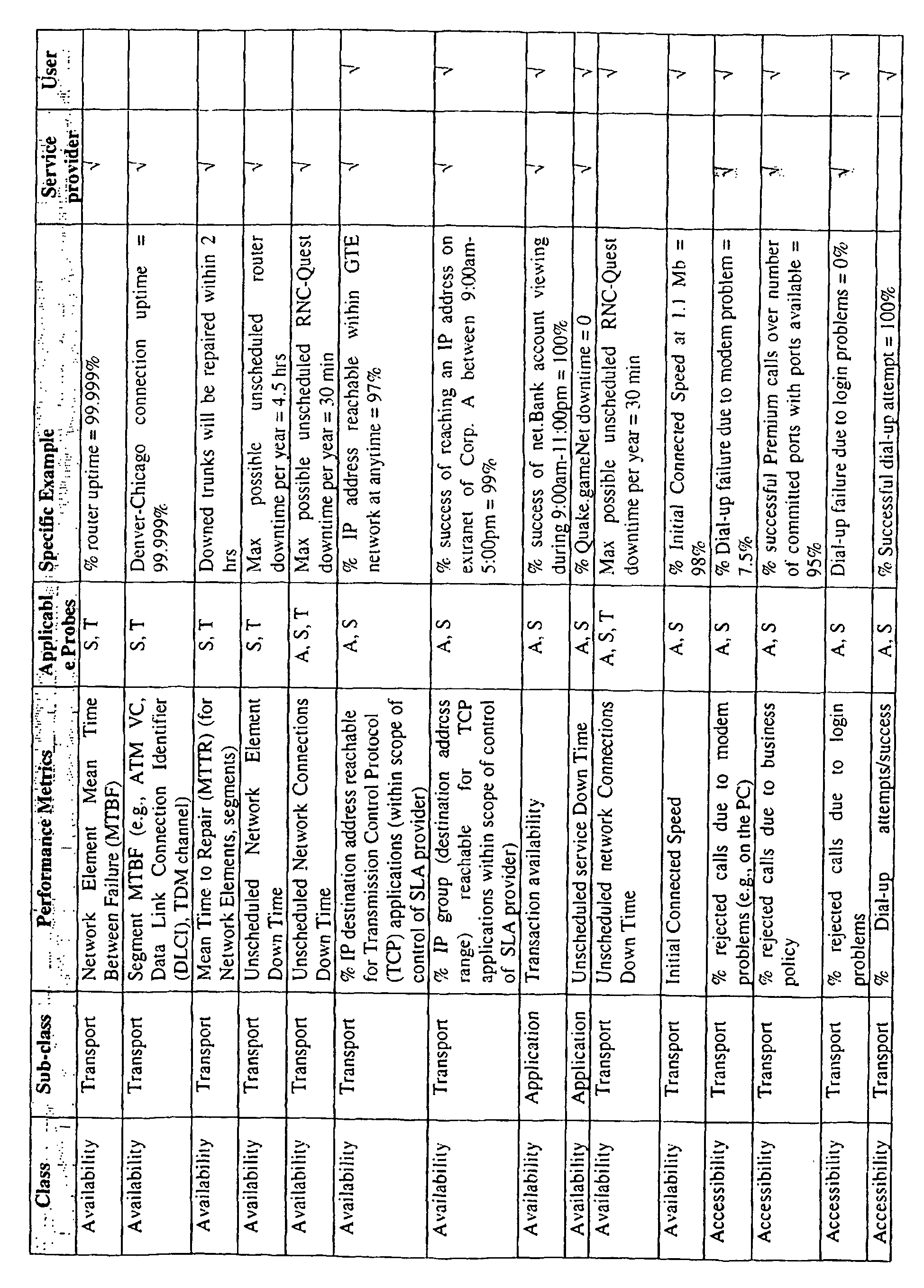

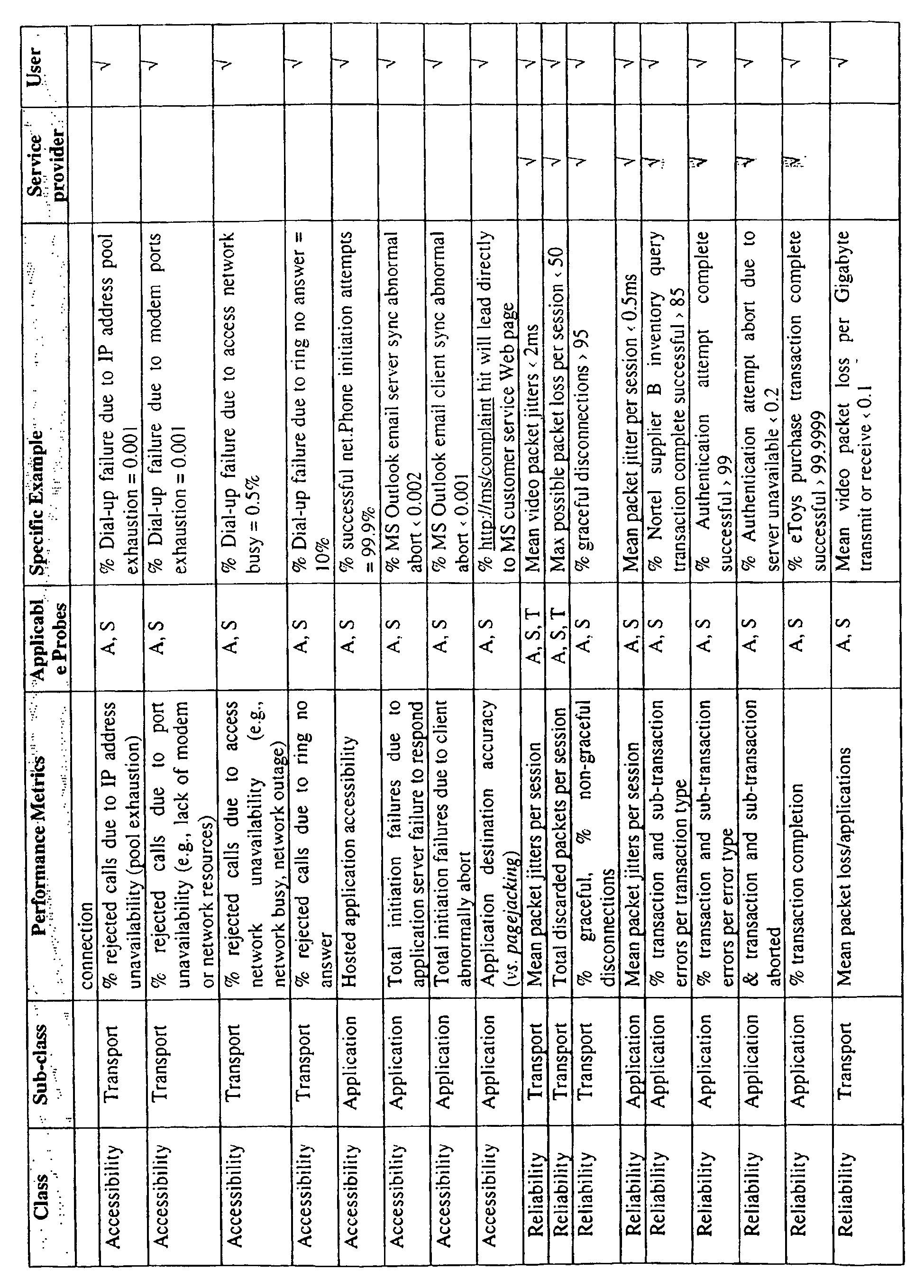

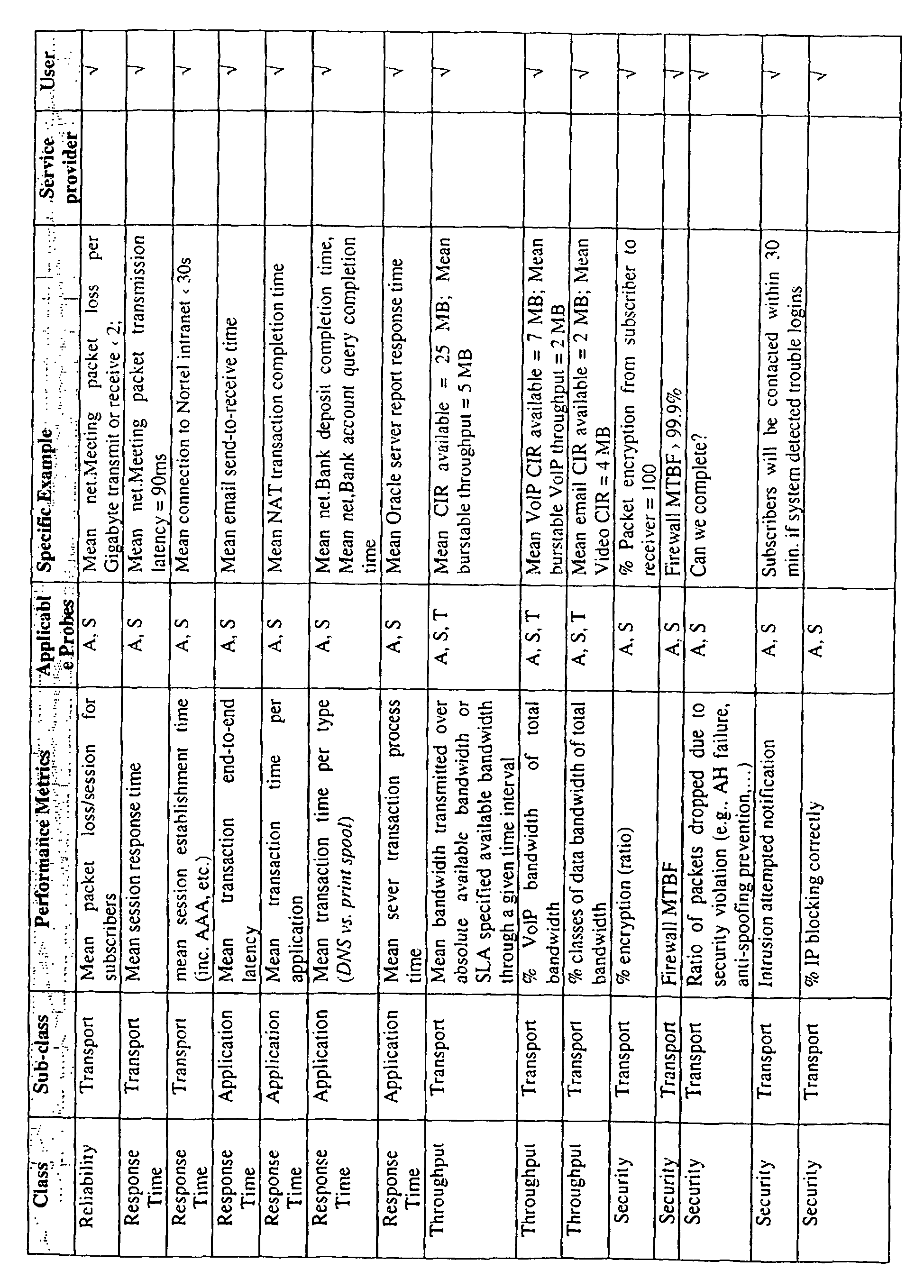

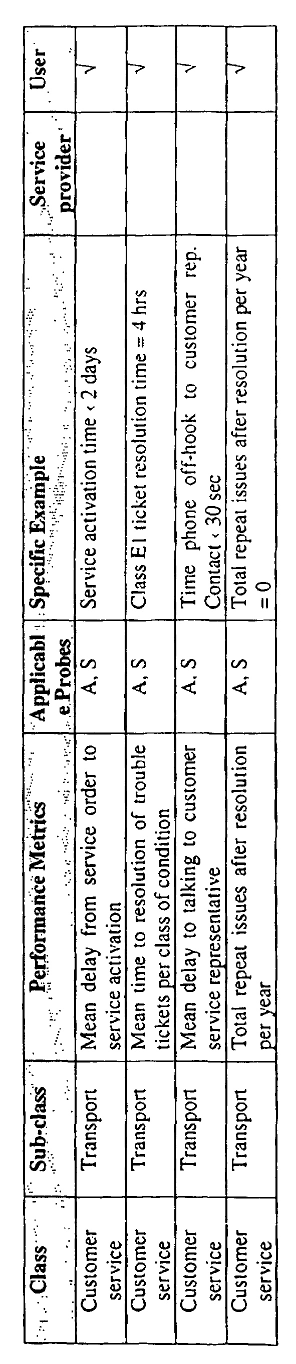

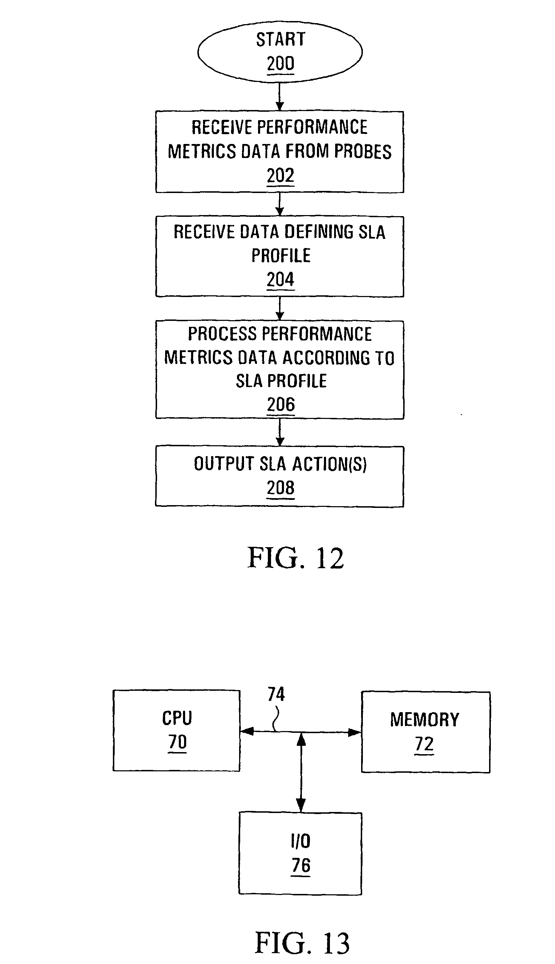

The flowchart illustrated at Figure 12 summarizes the operation of the SLA manager 12. At step 200 the process starts. At step 202 the SLA manager 24 receives performance metrics data from probes T1-n, S1-n and A1-n. At step 204 the SLA manager receives data defining the SLA profile to be followed. At step 206 the SLA manager 24 processes the performance metrics data according to the SLA profile and at step 208 the SLA manager 24 issues one or more SLA actions.

In a possible variant, the SLA manager can be supplied with simulated performance metrics values generated by a model of the data network, or historical performance metrics data obtained from a real data network. This allows the network operator or service provider to construct hypothetical scenarios and determine future compliance of a data network with current or planned SLA profiles.

In another variant, the SLA manager 24 does not connect directly to the probes T1-Tn, S1-Sn and A1-An to receive the performance metrics data. Rather the performance metrics data is first recorded on a suitable computer readable storage medium and then played back to the SLA manager 24 that will perform the data processing operations. This procedure is useful in instances where the amount of performance metrics data is so great that real-time processing is not possible or not practical.

Under another possible variant, the processing service 61, is provided with an information screening capability to deliver only selected information resulting from an SLA action to selected recipients. For example, the service provider or network operator is likely to have more interest in the overall performance of the data network 100, hence he will have access to all the information resulting from the information screening capability to deliver only selected information resulting from an SLA action to selected recipients. For example, the service provider or network operator is likely to have more interest in the overall performance of the data network 100, hence he will have access to all the information resulting from the SLA action(s). In contrast, a certain user 112 - 124 will receive only information reporting if the data network complies with the SLA profile of the user, along with corrective measures taken or planned, if any. The user 112 - 124 is thus prevented from accessing information relative to another user.

The tool 10 and the SLA manager 24 are implemented in software. The software is run on a suitable computing device that can be standalone or can possess a distributed architecture. An example of such a computing device is shown in Fig. 13. The computing device generally comprises a Central Processing Unit (CPU) 70 that is connected to a memory 72 through a data bus 74. An input/output interface 76, also connected to the data bus 74, allows the computing device to exchange data signals with external devices. The software that implements the functionality of the tool 10 or of the SLA manager 24 is loaded in the memory 72 and executed by the CPU 70. The memory 72 may also include portions reserved for holding data on which the software operates such as the values on which SLA functions or rule apply.

## Claims

1. A computer readable storage medium containing a program element for execution by a computing entity for implementing a Service Level Agreement SLA system for assessing a performance of a data network (100), the data network (100) having:
a) a transport layer (126);
b) a services layer (128);
c) an applications layer (130);
d) a plurality of probes associated with the transport, services and applications layers of the data network (100) and generating performance metrics data, said SLA system comprising:
a SLA manager including:
i. an input to receive the performance metrics data and a SLA profile associated to a user of the data network (100); and
ii. a processing unit (61) for measuring a certain performance objective defined by the SLA profile at least in part on the basis of performance metrics data from a first selected one of the plurality of probes associated with one layer of the data network (100) in conjunction with performance metrics data from a second selected one of the plurality of probes associated with another layer of the data network (100); said processing unit (61) being operative to generate at least one action in response to the measuring,
**characterized in that**:
said SLA system further comprises:
- a SLA profile generator including:
i. a user interface (12) enabling the user of the data network (100) to provide data elements conveying at least one performance objective related to a performance of the data network (100); and
ii. a processor adapted for processing said data elements to generate the SLA profile associated to the user of the data network (100), the SLA profile defining one or more performance objectives related to the performance of the data network (100).

2. A computer readable storage medium as defined in claim 1, wherein said processing unit (61) is operative for measuring a certain performance objective defined by the SLA profile at least in part on the basis of performance metrics data from a probe associated with the transport layer (126) of the data network (100) in conjunction with performance metrics data from a probe associated with the services layer (128) of the data network (100).

3. A computer readable storage medium as defined in claim 1, wherein said processing unit (61) is operative for measuring a certain performance objective defined by the SLA profile at least in part on the basis of performance metrics data from a probe associated with the applications layer (130) of the data network (100) in conjunction with performance metrics data from a probe associated with the services layer (128) of the data network (100).

4. A computer readable storage medium as defined in claim 1, wherein said processing unit (61) is operative for measuring a certain performance objective defined by the SLA profile at least in part on the basis of performance metrics data from a probe associated with the transport layer (126) of the data network (100) in conjunction with performance metrics data from a probe associated with the services layer (128) of the data network (100) and in conjunction with performance metrics data from a probe associated with the applications layer (130) of the data network (100).

5. A computer readable storage medium as defined in claim 1, wherein the performance metrics data is real time data.

6. A computer readable storage medium as defined in claim 1, wherein the performance metrics data is historical data.

7. A computer readable storage medium as defined in claim 2, wherein the certain performance objective is selected from the group consisting of network element MTBF, network segment MTBF and network element MTTR, network segment MTTR.

8. A computer readable storage medium as defined in claim 3, wherein the certain performance objective is selected from the group consisting of % of IP destination address reachable for a TCP application, % of IP group reachable for a TCP application, transaction availability, unscheduled service down time, initial connection speed, % of rejected calls due to modem problem, % of rejected calls due to business policy, % of rejected calls due to login problems, % of dial-up attempts/success connection, % of rejected calls due to IP address unavailability, % of rejected calls due to port unavailability, % of rejected calls due to access network unavailability, S of rejected calls due to ring no answer, hosted application accessibility, total initiation failures due to application server failure to respond, total initiation failures due to client abnormally abort, application destination accuracy, % of graceful disconnections, % of non-graceful disconnections, mean packet jitters per session, % transaction and sub-transaction errors per transaction type, % transaction and sub-transaction errors per error type, % transactions and sub-transactions aborted, % transaction completion, mean packet loss per application, mean packet loss per session per subscriber, mean session response time, mean session establishment time, mean transaction end-to-end latency, mean transaction time per application, mean transaction time per type, mean server transaction process time, % of encryption ratio, firewall MTBF, ratio of packets dropped due to security violation, intrusion attempted notification, % IP blocking correctly, mean delay from service order to service activation, mean time to resolution of trouble tickets per class of condition and mean delay to talking to customer service representative and total repeat issues after resolution per year.

9. A computer readable storage medium as defined in claim 4, wherein the certain performance objective is selected from the group consisting of unscheduled network connections down time, mean packet jitters per session, total number of packets discarded per session, mean bandwidth transmitted over absolute available bandwidth, SLA specified available bandwidth through a given time interval, % of VoIP bandwidth of total bandwidth and % classes of data bandwidth of total bandwidth.

10. A computer readable storage medium as defined in claim 1, wherein the action is selected in the group consisting of positive action and null action.

11. A computer readable storage medium as defined in claim 10, wherein said positive action is selected in the group consisting of creation of a report, sending a command to an e-mail server and creating, modifying or deleting a billing record.

12. A Service Level Agreement SLA system for assessing a performance of a data network (100), the data network (100) having:
a) a transport layer (126) ;
b) a services layer (12B);
c) an applications layer (130);
d) a plurality of probes associated with the transport, services and applications layers of the data network (100) and generating performance metrics data,
said SLA system comprising:
- a SLA manager including:
i. an input to receive the performance metrics data and a SLA profile associated to a user of the data network (100); and
ii. a processing unit (61) for measuring a certain performance objective defined by the SLA profile at least in part on the basis of performance metrics data from a first selected one of the plurality of probes associated with one layer of the data network (100) in conjunction with performance metrics data from a second selected one of the plurality of probes associated with another layer of the data network (100); and
said processing unit (61) being operative to generate at least one action in response to the measuring;
**characterized in that**:
said SLA system further comprises:
- a SLA profile generator including:
i. a user interface (12) enabling the user of the data network (100) to provide data elements conveying at least one performance objective related to a performance of the data network (100); and
ii. a processor adapted for processing said data elements to generate the SLA profile associated to the user of the data network (100), the SLA profile defining one or more performance objectives related to the performance of the data network (100).

13. A method to assess performance of a data network (100), said data network (100) including:
a) a transport layer (126);
b) a services layer (128);
c) an applications layer (130);
d) a plurality of probes associated with the transport, services and applications layers of the data network (100) and generating performance metrics data;
said method comprising
i. measuring a certain performance objective defined by a predetermined Service Level Agreement SLA profile associated with a user of the data network (100) at least in part on the basis of performance metrics data from a first selected one of the plurality of probes associated with one layer of the data network (100) in conjunction with performance metrics data from a second selected on of the plurality of probes associated with another layer of the data network (100); and
ii. generating at least one action in response to the measuring;
**characterized by**:
i- providing a user interface (12) for enabling the user of the data network (100) to provide data elements conveying at least one performance objective related to the data network (100); and
ii. processing said data elements to generate the SLA profile associated with the user of the data network (100), the SLA profile defining one or more performance objectives related to a performance of the data network (100).

14. The computer readable storage medium as defined in claim 1 or the method as defined in claim 13, wherein the user interface is adapted for:
a) conveying a menu including a plurality of predetermined SLA performance objectives; and
b) enabling the user of the data network (100) to select at least one predetermined SLA performance objective from the menu.

15. The computer readable storage medium as defined in claim 1 or the method as defined in claim 13, wherein the user interface is adapted for allowing a user to provide the name of at least one predetermined SLA performance objective.

## Patentansprüche

1. Computerlesbares Speichermedium, das ein Programmelement zur Ausführung durch eine Computereinheit zur Implementierung eines DienstgüteVereinbarungs-, SLA-, Systems zur Abschätzung der Betriebsleistung eines Daten-Netzwerks (100) enthält, wobei das Daten-Netzwerk (100) Folgendes aufweist:
a) eine Transportschicht (126);
b) eine Diensteschicht (128);
c) eine Anwendungsschicht (130);
d) eine Vielzahl von Sonden, die den Transport-, Dienste- und Anwendungsschichten des Daten-Netzwerkes (100) zugeordnet sind und Betriebsleistungs-Metrik-Daten erzeugen, wobei das SLA-System Folgendes umfasst:
eine SLA-Verwaltung, die Folgendes einschließt:
i. einen Eingang zum Empfang der Betriebsleistungs-Metrik-Daten und eines SLA-Profils, das einem Benutzer des Daten-Netzwerks (100) zugeordnet ist; und
ii. eine Verarbeitungseinheit (61) zur Messung eines bestimmten Betriebsleistungs-Ziels, das durch das SLA-Profil definiert ist, zumindest teilweise auf der Grundlage von Betriebsleistungs-Metrik-Daten von einer ersten ausgewählten der Vielzahl von Sonden, die einer Schicht des Daten-Netzwerkes (100) zugeordnet sind, in Verbindung mit Betriebsleistungs-Metrik-Daten von einer zweiten ausgewählten der Vielzahl von Sonden, die einer anderen Schicht des Daten-Netzwerkes (100) zugeordnet ist, wobei die Verarbeitungseinheit (61) betreibbar ist, um zumindest eine Aktion als Antwort auf die Messung zu erzeugen,
**dadurch gekennzeichnet, dass**:
das SLA-System weiterhin Folgendes umfasst:
einen SLA-Profilgenerator, der Folgendes einschließt:
i. eine Benutzer-Schnittstelle (12), die es dem Benutzer des Daten-Netzwerkes (100) ermöglicht, Datenelemente zu liefern, die zumindest ein Betriebsleistungs-Ziel vermitteln, das sich auf eine Betriebsleistung des Daten-Netzwerkes (100) bezieht; und
ii. einen Prozessor, der zur Verarbeitung der Datenelemente zur Erzeugung des SLA-Profils ausgebildet ist, das dem Benutzer des Daten-Netzwerkes (100) zugeordnet ist, wobei das SLA-Profil ein oder mehrere Betriebsleistungs-Ziele definiert, die sich auf die Betriebsleistung des Daten-Netzwerkes (100) beziehen.

2. Computerlesbares Speichermedium nach Anspruch 1, bei dem die Verarbeitungseinheit (61) betreibbar ist, um ein bestimmtes Betriebsleistungs-Ziel, das durch das SLA-Profil definiert ist, zumindest teilweise auf der Grundlage von Betriebsleistungs-Metrik-Daten von einer Sonde, die der Transportschicht (126) des Daten-Netzwerkes (100) zugeordnet ist, in Verbindung mit den Betriebsleistungs-Metrik-Daten von einer Sonde zu messen, die der Diensteschicht (128) des Daten-Netzwerkes (100) zugeordnet ist.

3. Computerlesbares Speichermedium nach Anspruch 1, bei dem die Verarbeitungseinheit (61) betreibbar ist, um ein bestimmtes Betriebsleistungs-Ziel, das durch das SLA-Profil definiert ist, zumindest teilweise auf der Grundlage von Betriebsleistungs-Metrik-Daten von einer Sonde, die der Anwendungsschicht (130) des Daten-Netzwerkes (100) zugeordnet ist, in Verbindung mit Betriebsleistungs-Metrik-Daten von einer Sonde zu messen, die der Diensteschicht (128) des Daten-Netzwerkes (100) zugeordnet ist.

4. Computerlesbares Speichermedium nach Anspruch 1, bei dem die Verarbeitungseinheit (61) betreibbar ist, um ein bestimmtes Betriebsleistungs-Ziel, das durch das SLA-Profil definiert ist, zumindest teilweise auf der Grundlage von Betriebsleistungs-Metrik-Daten von einer Sonde, die der Transportschicht (126) des Daten-Netzwerkes (100) zugeordnet ist, in Verbindung mit Betriebsleistungs-Metrik-Daten von einer Sonde, die der Diensteschicht (128) des Daten-Netzwerkes (100) zugeordnet ist, und in Verbindung mit Betriebsleistungs-Metrik-Daten von einer Sonde zu messen, die der Anwendungsschicht (130) des Daten-Netzwerkes (100) zugeordnet ist.

5. Computerlesbares Speichermedium nach Anspruch 1, bei dem die Betriebsleistungs-Metrik-Daten Echtzeit-Daten sind.

6. Computerlesbares Speichermedium nach Anspruch 1, bei dem die Betriebsleistungs-Metrik-Daten historische Daten sind.

7. Computerlesbares Speichermedium nach Anspruch 2, bei dem das Betriebsleistungs-Ziel aus der Gruppe ausgewählt ist, die aus der Netzwerk-Element-MTBF, der Netzwerk-Segment-MTBF und der Netzwerk-Element-MTTR und der Netzwerk-Segment-MTTR ausgewählt ist.

8. Computerlesbares Speichermedium nach Anspruch 3, bei dem das bestimmte Betriebsleistungs-Ziel aus der Gruppe ausgewählt ist, die aus Folgendem besteht: % von IP-Zieladressen, die für eine TCP-Anwendung erreichbar sind, % der IP-Gruppe, die für eine TCP-Anwendung erreichbar ist, der Transaktions-Verfügbarkeit, der ungeplanten Diensteausfall-Zeit, der anfänglichen Verbindungsgeschwindigkeit, % der zurückgewiesenen Anrufe aufgrund eines Modem-Problems, % von zurückgewiesenen Anrufen aufgrund von Geschäfts-Richtlinien, % von zurückgewiesenen Anrufen aufgrund von Einlog-Problemen, % von Einwahlversuchen/erfolgreichen Verbindungen, % von zurückgewiesenen Anrufen aufgrund einer IP-Adressen-Nichtverfügbarkeit, % von zurückgewiesenen Anrufen aufgrund einer Port-Nichtverfügbarkeit, % von zurückgewiesenen Anrufen aufgrund einer Zugangsnetzwerk-Nichtverfügbarkeit, % von zurückgewiesenen Anrufen aufgrund einer fehlenden Antwort auf Rufsignale, Zugänglichkeit von auf einem Host ablaufenden Anwendungen, Gesamt-Initialisierungsausfälle aufgrund von nicht antwortenden Anwendungsservern, Gesamt-Initialisierungsausfälle aufgrund eines anormalen Abbruchs eines Klienten, Anwendungs-Zielgenauigkeit, % von sanften Trennvorgängen, % von nicht sanften Trennvorgängen, mittlere Paket-Jitter pro Sitzung, % Transaktions- und Teil-Transaktions-Fehler pro Transaktionstyp, % Transaktions- und Teil-Transaktions-Fehler pro Fehlertyp, % abgebrochene Transaktionen und Teil-Transaktionen, % Transaktions-Abschluss, mittlerer Paketverlust pro Anwendung, mittlerer Paketverlust pro Sitzung pro Teilnehmer, mittlere Sitzungs-Ansprechzeit, mittlere Sitzungs-Aufbauzeit, mittlere Transaktions-Ende-zu-Ende-Latenz, mittlere Transaktionszeit pro Anwendung, mittlere Transaktionszeit pro Typ, mittlere Server-Transaktions-Verarbeitungszeit, % des Verschlüsselungsverhältnisses, Firewall-MTBF, Verhältnis von Paketen, die aufgrund von Sicherheits-Verletzungen verworfen wurden, Benachrichtigung über versuchte Eindringvorgänge, % korrekte IP-Blockierung, mittlere Verzögerung von Dienste-Aufträgen zur Diensteaktivierung, mittlere Zeit bis zur Auflösung von Fehlerprotokoll pro Klasse der Bedingung, und mittlere Verzögerung bis zum Ansprechen eines Kundendienst-Vertreters, und gesamte wiederholte Probleme nach der Auflösung pro Jahr.

9. Computerlesbares Speichermedium nach Anspruch 4, bei dem das bestimmte Betriebsleistungs-Ziel aus der Gruppe ausgewählt ist, die aus Folgendem besteht: ungeplante Netzwerkverbindungs-Ausfallzeit, mittlere Paket-Jitter pro Sitzung, Gesamtzahl von pro Sitzung verworfenen Paketen, mittlere übertragene Bandbreite gegenüber der absoluten verfügbaren Bandbreite, SLAspezifizierte verfügbare Bandbreite über ein vorgegebenes Zeitintervall, % de VolP-Bandbreite von der Gesamtbandbreite, und % Klassen der Daten-Bandbreite von der Gesamtbandbreite.

10. Computerlesbares Speichermedium nach Anspruch 1, bei dem die Aktion in der Gruppe ausgewählt ist, die aus einer positiven Aktion und einer Null-Aktion besteht.

11. Computerlesbares Speichermedium nach Anspruch 10, bei dem die positive Aktion in der Gruppe ausgewählt ist, die aus der Schaffung eines Berichtes, dem Senden eines Befehls an einen E-Mail-Server und der Erzeugung, Modifikation oder Löschung einer Abrechnungs-Aufzeichnung besteht.

12. Dienstgütevereinbarungs-, SLA-, System zur Abschätzung der Betriebsleistung eines Daten-Netzwerkes (100), wobei das Daten-Netzwerk (100) Folgendes aufweist:
a) eine Transportschicht (126);
b) eine Diensteschicht (128);
c) eine Anwendungsschicht (130);
d) eine Vielzahl von Sonden, die den Transport-, Dienste- und Anwendungs-Schichten des Daten-Netzwerkes (100) zugeordnet sind und Betriebsleistungs-Metrik-Daten erzeugen,
wobei das SLA-System Folgendes umfasst:
- eine LSA-Verwaltung, die Folgendes einschließt:
i. einen Eingang zum Empfang der Betriebsleistungs-Metrik-Daten und eines Sla4-Profils, das einem Benutzer des Daten-Netzwerkes (100) zugeordnet ist; und
ii. eine Verarbeitungseinheit (61) zur Messung eines bestimmten Betriebsleistungs-Ziels, das durch das SLA-Profil definiert ist, zumindest teilweise auf der Grundlage der Betriebsleistungs-Metrik-Daten von einer ersten ausgewählten der Vielzahl von Sonden, die einer Schicht des Daten-Netzwerkes (100) zugeordnet ist, in Verbindung mit Betriebsleistungs-Metrik-Daten von einer zweiten ausgewählten der Vielzahl von Sonden, die einer weiteren Schicht des Daten-Netzwerkes (100) zugeordnet ist; und wobei die Verarbeitungseinheit (61) betreibbar ist, zumindest eine Aktion als Antwort auf die Messung zu erzeugen;
**dadurch gekennzeichnet, dass**:
das SLA-System weiterhin Folgendes umfasst:
- einen SLA-Profilgenerator, der Folgendes einschließt:
i. eine Benutzer-Schnittstelle (12), die es dem Benutzer des Daten-Netzwerkes (100) ermöglicht, Datenelemente zu liefern, die zumindest ein Betriebsleistungs-Ziel vermitteln, das sich auf eine Betriebsleistung des Daten-Netzwerkes (100) bezieht; und
ii. einen Prozessor, der zur Verarbeitung der Datenelemente zur Erzeugung des SLA-Profils ausgebildet ist, das dem Benutzer des Daten-Netzwerkes (100) zugeordnet ist, wobei das SLA-Profil ein oder mehrere Beriebsleistungs-Ziele definiert, die sich auf die Betriebsleistung des Daten-Netzwerkes (100) beziehen.

13. Verfahren zur Abschätzung der Betriebsleistung eines Daten-Netzwerkes (100), wobei das Daten-Netzwerk (100) Folgendes einschließt:
a) eine Transportschicht (126);
b) eine Diensteschicht (128);
c) eine Anwendungsschicht (130);
d) eine Vielzahl von Sonden, die den Transport-, Dienste- und Anwendungs-Schichten des Daten-Netzwerkes (100) zugeordnet sind und Betriebsleistungs-Metrik-Daten erzeugen,
wobei das Verfahren Folgendes umfasst:
i. Messen eines bestimmten Betriebsleistungs-Ziels, das durch ein einem Benutzer des Daten-Netzwerkes (100) zugeordnetes vorgegebenes Dienstgütevereinbarungs-, SLA-Profil definiert ist, zumindest teilweise auf der Grundlage von Betriebsleistungs-Metrik-Daten von einer ersten ausgewählten der Vielzahl von Sonden, die einer Schicht des Daten-Netzwerkes (100) zugeordnet ist, in Verbindung mit den Betriebsleistungs-Metrik-Daten von einer weiten ausgewählten der Vielzahl von Sonden, die eine anderen Schicht des Daten-Netzwerkes (100) zugeordnet ist; und
ii. Erzeugen von zumindest einer Aktion als Antwort auf die Messung; **gekennzeichnet durch** die folgenden Schritte:
i. Bereitstellen einer Benutzer-Schnittstelle (12), um es dem Benutzer des Daten-Netzwerkes (100) zu ermöglichen, Datenelemente zu liefern, die zumindest ein Betriebsleistungs-Ziel vermitteln, das auf das Daten-Netzwerk (100) bezogen ist; und
ii. Verarbeiten der Datenelemente zur Erzeugung des dem Benutzer des Daten-Netzwerkes (100) zugeordneten SLA-Profils, wobei das SLA-Profil ein oder mehrere Betriebsleistungs-Ziele definiert, die auf die Betriebsleistung des Daten-Netzwerkes (100) bezogen sind.

14. Computerlesbares Speichermedium nach Anspruch 1, oder Verfahren nach Anspruch 13, bei dem die Benutzer-Schnittstelle so ausgebildet ist, dass sie:
a) ein Menü vermittelt, das eine Vielzahl von vorgegebenen SLA-Betriebsleistungs-Zielen einschließt; und
b) es dem Benutzer des Daten-Netzwerkes (100) ermöglicht, zumindest ein vorgegebenes SLA-Betriebsleistungs-Ziel aus dem Menü auszuwählen.

15. Computerlesbares Speichermedium nach Anspruch 1, oder Verfahren nach Anspruch 13, bei dem die Benutzer-Schnittstelle so ausgebildet ist, dass sie es einem Benutzer ermöglicht, den Namen von zumindest einem vorgegebenen SLA-Betriebsleistungs-Ziel zu liefern.

## Revendications

1. Un support de stockage lisible par ordinateur contenant un élément de programme pour l'exécution par une entité de calcul pour mettre en oeuvre un système de Contrat de Niveau de Service, SLA (Service Level Agreement) pour évaluer une performance d'un réseau de données (100), le réseau de données (100) ayant :
a) une couche de transport (126);
b) une couche de services (128);
c) une couche d'applications (130);
d) une multiplicité de sondes associées aux couches de transport, de services et d'applications du réseau de données (100) et générant des données de métrique de performance, ledit système de SLA comprenant :
un gestionnaire de SLA incluant :
i. une entrée pour recevoir les données de métrique de performance et un profil de SLA associé à un utilisateur du réseau de données (100); et
ii. une unité de traitement (61) pour mesurer un certain objectif de performance défini par le profil de SLA, au moins en partie sur la base de données de métrique de performance provenant d'une première sonde sélectionnée parmi la multiplicité de sondes associées à une couche du réseau de données (100), conjointement à des données de métrique de performance provenant d'une seconde sonde sélectionnée parmi la multiplicité de sondes associées à une autre couche du réseau de données (100);
l'unité de traitement (61) fonctionnant de façon à générer au moins une action en réponse à la mesure,
**caractérisé en ce que**
le système de SLA comprend en outre :
- un générateur de profil de SLA incluant :
i. une interface d'utilisateur (12) permettant à l'utilisateur du réseau de données (100) de fournir des éléments de données spécifiant au moins un objectif de performance lié à une performance du réseau de données (100); et
ii. un processeur adapté pour traiter les éléments de données de façon à générer le profil de SLA associé à l'utilisateur du réseau de données (100), le profil de SLA définissant un ou plusieurs objectifs de performance liés à la performance du réseau de données (100).

2. Un support de stockage lisible par ordinateur tel que défini dans la revendication 1, dans lequel l'unité de traitement (61) fonctionne de façon à mesurer un certain objectif de performance défini par le profil de SLA, au moins en partie sur la base de données de métrique de performance provenant d'une sonde associée à la couche de transport (126) du réseau de données (100), conjointement à des données de métrique de performance provenant d'une sonde associée à la couche de services (128) du réseau de données (100).

3. Un support de stockage lisible par ordinateur tel que défini dans la revendication 1, dans lequel l'unité de traitement (61) fonctionne de façon à mesurer un certain objectif de performance défini par le profil de SLA, au moins en partie sur la base de données de métrique de performance provenant d'une sonde associée à la couche d'applications (130) du réseau de données (100), conjointement à des données de métrique de performance provenant d'une sonde associée à la couche de services (128) du réseau de données (100).

4. Un support de stockage lisible par ordinateur tel que défini dans la revendication 1, dans lequel l'unité de traitement (61) fonctionne de façon à mesurer un certain objectif de performance défini par le profil de SLA, au moins en partie sur la base de données de métrique de performance provenant d'une sonde associée à la couche de transport (126) du réseau de données (100), conjointement à des données de métrique de performance provenant d'une sonde associée à la couche de services (128) du réseau de données (100) et conjointement à des données de métrique de performance provenant d'une sonde associée à la couche d'applications (130) du réseau de données (100).

5. Un support de stockage lisible par ordinateur tel que défini dans la revendication 1, dans lequel les données de métrique de performance sont des données en temps réel.

6. Un support de stockage lisible par ordinateur tel que défini dans la revendication 1, dans lequel les données de métrique de performance sont des données historiques.

7. Un support de stockage lisible par ordinateur tel que défini dans la revendication 2, dans lequel le certain objectif de performance est sélectionné dans le groupe constitué du temps moyen de bon fonctionnement d'un élément de réseau, du temps moyen de bon fonctionnement d'un segment de réseau et du temps moyen de réparation d'un élément de réseau et du temps moyen de réparation d'un segment de réseau.

8. Un support de stockage lisible par ordinateur tel que défini dans la revendication 3, dans lequel le certain objectif de performance est sélectionné dans le groupe comprenant : le pourcentage d'adresses IP de destination pouvant être atteintes pour une application TCP, le pourcentage de groupes IP pouvant être atteint pour une application TCP, la disponibilité de transaction, le temps hors service non planifié, la vitesse de connexion initiale, le pourcentage d'appels rejetés à cause d'un problème de modem, le pourcentage d'appels rejetés à cause de la politique d'exploitation, le pourcentage d'appels rejetés à cause de problèmes d'ouverture de session, le pourcentage de tentatives / succès de connexion commutée, le pourcentage d'appels rejetés à cause de l'indisponibilité d'adresses IP, le pourcentage d'appels rejetés à cause de l'indisponibilité de ports, le pourcentage d'appels rejetés à cause de l'indisponibilité de réseau d'accès, le pourcentage d'appels rejetés à cause de l'absence de réponse à la sonnerie, l'accessibilité de l'application hébergée, les échecs d'établissement totaux à cause de l'incapacité du serveur d'application à réagir, les échecs d'établissement totaux à cause d'un abandon anormal par le client, l'exactitude de destination d'application, le pourcentage de déconnexions effectuées de manière ordonnée, le pourcentage de déconnexions effectuées de manière non ordonnée, les gigues de paquet moyennes par session; le pourcentage d'erreurs de transaction et de sous-transaction par type de transaction, le pourcentage d'erreurs de transaction et de sous-transaction par type d'erreur, le pourcentage de transactions et de sous-transactions abandonnées, le pourcentage d'achèvements de transaction, la perte de paquets moyenne par application, la perte de paquets moyenne par session et par abonné, le temps de réponse de session moyen, le temps d'établissement de session moyen, la latence de bout en bout de transaction moyenne, le temps de transaction moyen par application, le temps de transaction moyen par type, le temps de processus de transaction de serveur moyen, le pourcentage de rapport de chiffrement, le temps moyen de bon fonctionnement de pare-feu, le rapport de paquets abandonnés à cause d'une transgression de sécurité, la notification de tentative d'intrusion, le pourcentage de blocage IP de façon correcte, le retard moyen entre une demande de service et l'activation du service, le temps moyen de résolution de notifications de dérangement par classe de condition et le délai moyen pour parler à un représentant du service client et le nombre total de problèmes répétés après résolution, par an.

9. Un support de stockage lisible par ordinateur tel que défini dans la revendication 4, dans lequel le certain objectif de performance est sélectionné dans le groupe comprenant le temps hors service de connexions de réseau non planifié, les gigues de paquet moyennes par session, le nombre total de paquets rejetés par session, le rapport entre la largeur de bande moyenne émise et la largeur de bande disponible absolue, la largeur de bande disponible spécifiée par un SLA au cours d'un intervalle de temps donné, le pourcentage de largeur de bande de Voix sur IP rapporté à la largeur de bande totale et le pourcentage de classes de largeur de bande de données rapporté à la largeur de bande totale.

10. Un support de stockage lisible par ordinateur défini dans la revendication 1, dans lequel l'action est sélectionnée dans le groupe comprenant une action positive et une action nulle.

11. Un support de stockage lisible par ordinateur tel que défini dans la revendication 10, dans lequel l'action positive est sélectionnée dans le groupe comprenant la création d'un compte-rendu, l'envoi d'un ordre à un serveur de courrier électronique et la création, la modification ou la suppression d'un enregistrement de facturation.

12. Un système de Contrat de Niveau de Service, SLA (Service Level Agreement), pour évaluer une performance d'un réseau de données (100), le réseau de données (100) ayant :
a) une couche de transport (126);
b) une couche de services (128);
c) une couche d'applications (130);
d) une multiplicité de sondes associées aux couches de transport, de services et d'applications du réseau de données (100) et générant des données de métrique de performance,
le système de SLA comprenant :
- un gestionnaire de SLA incluant :
i. une entrée pour recevoir les données de métrique de performance et un profil de SLA associé à un utilisateur du réseau de données (100); et
ii. une unité de traitement (61) pour mesurer un certain objectif de performance défini par le profil de SLA, au moins en partie sur la base de données de métrique de performance provenant d'une première sonde sélectionnée parmi la multiplicité de sondes associées à une couche du réseau de données (100), conjointement à des données de métrique de performance provenant d'une seconde sonde sélectionnée parmi la multiplicité de sondes associées à une autre couche du réseau de données (100); et
l'unité de traitement (61) fonctionnant de façon à générer au moins une action en réponse à la mesure,
**caractérisé en ce que**
le système de SLA comprend en outre :
- un générateur de profil de SLA incluant :
i. une interface d'utilisateur (12) permettant à l'utilisateur du réseau de données (100) de fournir des éléments de données spécifiant au moins un objectif de performance lié à une performance du réseau de données (100); et
ii. un processeur adapté pour traiter les éléments de données de façon à générer le profil de SLA associé à l'utilisateur du réseau de données (100), le profil de SLA définissant un ou plusieurs objectifs de performance liés à la performance du réseau de données (100).

13. Un procédé pour estimer une performance d'un réseau de données (100), le réseau de données (100) incluant:
a) une couche de transport (126);
b) une couche de services (128);
c) une couche d'applications (130);
d) une multiplicité de sondes associées aux couches de transport, de services et d'applications du réseau de données (100) et générant des données de métrique de performance;
le procédé comprenant les étapes consistant à :
i. mesurer un certain objectif de performance défini par un profil de Contrat de Niveau de Service, SLA (Service Level Agreement) prédéterminé, associé à un utilisateur du réseau de données (100), au moins en partie sur la base des données de métrique de performance provenant d'une première sonde sélectionnée parmi la multiplicité de sondes associées à une couche du réseau de données (100), conjointement à des données de métrique de performance provenant d'une seconde sonde sélectionnée parmi la multiplicité de sondes associées à une autre couche du réseau de données (100); et
ii. générer au moins une action en réponse à la mesure;
**caractérisé par** les étapes consistant à :
i. fournir une interface d'utilisateur (12) pour permettre à l'utilisateur du réseau de données (100) de fournir des éléments de données spécifiant au moins un objectif de performance lié au réseau de données (100); et
ii. traiter lesdits éléments de données pour générer le profil de SLA associé à l'utilisateur du réseau de données (100), le profil de SLA définissant un ou plusieurs objectifs de performance liés à une performance du réseau de données (100).

14. Le support de stockage lisible par ordinateur tel que défini dans la revendication 1 ou le procédé défini dans la revendication 13, dans lequel l'interface d'utilisateur est adaptée pour :
a) présenter un menu incluant une multiplicité d'objectifs de performance de SLA prédéterminés; et
b) permettre à l'utilisateur du réseau données (100) de sélectionner dans le menu au moins un objectif de performance de SLA prédéterminé.

15. Le support de stockage lisible par ordinateur défini dans la revendication 1 ou le procédé défini dans la revendication 13, dans lequel l'interface d'utilisateur est adaptée pour permettre à un utilisateur de fournir le nom d'au moins un objectif de performance de SLA prédéterminé.
